# EUROPEAN PATENT APPLICATION

(11) **EP 4 485 482 A1**
(43) Date of publication of application: **01.01.2025**
(21) Application number: 23182398.0
(22) Date of filing: 29.06.2023
(51) Int. Cl.: G21K 1/00, G06N 10/40

(54) **DEVICE FOR CONTROLLING TRAPPED IONS**

(71) Applicant: Infineon Technologies Austria AG, 9500 Villach (AT)
(72) Inventor: AUCHTER, Silke Katharina, 9500 Villach (AT); SAINI, Sagar, 9500 Villach (AT); LAURENT, Fabian, 9500 Villach (AT); SIEBERER, Michael, 8010 Graz (AT); CHATTERJEE, Radhika, 01307 Dresden (DE)
(74) Representative: Lambsdorff & Lange Patentanwälte Partnerschaft mbB

(57) **Abstract**

A device (300) for controlling trapped ions (180) includes a semiconductor substrate (120). The semiconductor substrate includes a first main surface (120A) and a second main surface (120B) opposite the first main surface. The substrate includes a doped region (120_1) adjacent the first main surface. An electrode (125) of an ion trap is disposed over the doped region. An insulating layer (130) is disposed between the electrode and the doped region. The substrate comprises a contact region (120_2) configured to be biased by an external potential, the contact region being electrically connected to the doped region and having a doping concentration higher than a doping concentration of the doped region.

## Description

### Technical Field

This disclosure relates generally to the field of ion traps, and in particular to ion traps for quantum computing.

### Background

Trapped ions are one of the most promising candidates for use as qubits (quantum bits) in quantum computers since they can be trapped with long lifetimes in a scalable array by virtue of electromagnetic fields.

Ions can be trapped in an alternating electromagnetic field generated by an RF (radio frequency) voltage applied to surface electrodes of micro-fabricated ion traps. The more ions to be trapped in the micro-fabricated ion trap device, the smaller can be the structural width of the electrodes and, e.g., of the feed lines to the electrodes.

The ions may be addressed by lasers for cooling, state preparation and other purposes. Photoionization may generate electrical charges in and/or on the substrate, which may cause uncontrolled stray fields and electrical noise. Stray fields can push the trapped ions out of the potential minimum of the RF field, increasing the micro-motion of the ions and thus heating the ions. This heating makes it difficult to use the ions for low error rate quantum operations.

### Summary

According to an aspect of the disclosure, a device for controlling trapped ions includes a semiconductor substrate. The semiconductor substrate includes a first main surface and a second main surface opposite the first main surface. The substrate includes a doped region adjacent the first main surface. An electrode of an ion trap is disposed over the doped region. An insulating layer is disposed between the electrode and the doped region. The substrate comprises a contact region configured to be biased by an external potential, the contact region being electrically connected to the doped region and having a doping concentration higher than a doping concentration of the doped region.

According to another aspect of the disclosure, a device for controlling trapped ions includes a semiconductor substrate. The semiconductor substrate includes a first main surface and a second main surface opposite the first main surface. The semiconductor substrate includes a drift region adjacent the first main surface. An RF electrode of an ion trap is disposed over the drift region. An insulating layer is disposed between the RF electrode and the drift region. The semiconductor substrate includes a first contact region configured to be biased by a first external potential and a second contact region configured to be biased by a second external potential, the drift region being disposed between and electrically connected to the first contact region and the second contact region.

According to another aspect of the disclosure, a method of manufacturing a device for controlling trapped ions includes providing a semiconductor substrate including a first main surface and a second main surface opposite the first main surface. The semiconductor substrate is doped to generate a doped region adjacent the first main surface. An insulating layer is generated over the doped region. A contact region configured to be biased by an external potential is generated in the semiconductor substrate. The contact region is electrically connected to the doped region and has a doping concentration higher than a doping concentration of the doped region. An electrode of an ion trap disposed over the doped region is generated.

According to another aspect of the disclosure, a method of manufacturing a device for controlling trapped ions includes providing a semiconductor substrate including a first main surface and a second main surface opposite the first main surface. An insulating layer is generated over the first main surface of the semiconductor substrate. A first contact region configured to be biased by a first external potential and a second contact region configured to be biased by a second external potential are generated, wherein a drift region of the semiconductor substrate is disposed between and electrically connected to the first contact region and the second contact region. An RF electrode of an ion trap disposed over the drift region is generated.

### Brief description of the drawings

The elements of the drawings are not necessarily to scale relative to each other. Like reference numerals designate corresponding similar parts. The features of the various illustrated examples can be combined unless they exclude each other and/or can be selectively omitted if not described to be necessarily required. Examples are depicted in the drawings and are exemplarily detailed in the description which follows.
Figure 1 is a schematic cross-sectional view of an exemplary device for controlling trapped ions.
Figure 2 is a top view of the exemplary device for controlling trapped ions shown in Figure 1.
Figure 3 is a schematic cross-sectional view of an exemplary device for controlling trapped ions having a doped region adjacent an upper surface of a substrate of the device.
Figure 4 is a schematic cross-sectional view of an exemplary device for controlling trapped ions having a drift zone adjacent an upper surface of a substrate of the device and an RF electrode of the ion trap disposed over the drift zone.
Figure 5 is a schematic cross-sectional view of an exemplary device for controlling trapped ions having a drift zone adjacent an upper surface of a substrate of the device and an RF electrode of the ion trap disposed over the drift zone.
Figure 6 is a schematic cross-sectional view of the exemplary device of Figure 5, wherein the drift zone includes a doped zone located below a ground electrode.
Figure 7 is a schematic cross-sectional view of an exemplary device for controlling trapped ions, wherein a contact region is adjacent a backside surface of the substrate of the device.
Figure 8 is a schematic cross-sectional view of an exemplary device for controlling trapped ions having multiple metal layers disposed over the upper surface of the substrate of the device.
Figure 9 is a schematic cross-sectional view of an exemplary device for controlling trapped ions having a further substrate disposed over and spaced apart from the substrate.
Figure 10 is a flowchart illustrating exemplary stages of a method of manufacturing a device for controlling trapped ions.
Figure 11 is a flowchart illustrating exemplary stages of a method of manufacturing a device for controlling trapped ions.

### Detailed description

As used in this specification, the terms "electrically connected" or "electrically coupled" or similar terms are not meant to mean that the elements are directly contacted together; intervening elements may be provided between the "electrically connected" or "electrically coupled" elements, respectively. However, in accordance with the disclosure, the above-mentioned and similar terms may, optionally, also have the specific meaning that the elements are directly contacted together, i.e. that no intervening elements are provided between the "electrically connected" or "electrically coupled" elements, respectively.

Further, the words "over" or "beneath" with regard to a part, element or material layer formed or located or arranged "over" or "beneath" a surface may be used herein to mean that the part, element or material layer be located (e.g. placed, formed, arranged, deposited, etc.) "directly on" or "directly under", e.g. in direct contact with, the implied surface. The word "over" or "beneath" used with regard to a part, element or material layer formed or located or arranged "over" or "beneath" a surface may, however, either be used herein to mean that the part, element or material layer be located (e.g. placed, formed, arranged, deposited, etc.) "indirectly on" or "indirectly under" the implied surface, with one or more additional parts, elements or layers being arranged between the implied surface and the part, element or material layer.

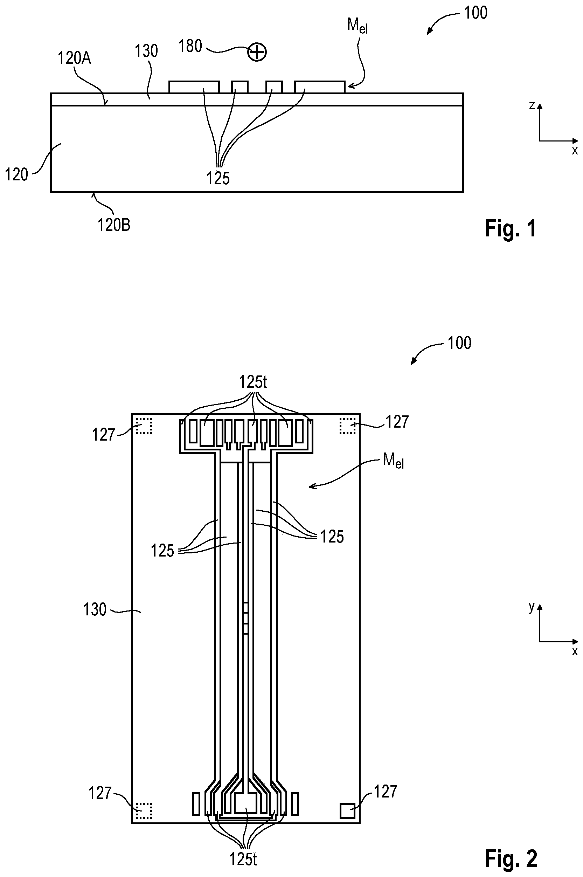

Referring to Figure 1, a device 100 for controlling trapped ions includes a semiconductor substrate 120 and one or more electrodes 125 disposed over the semiconductor substrate 120. The electrode(s) 125 may, e.g., be formed of a structured electrode layer Mₑₗ.

The device 100 contains at least one ion trap. The electrodes 125 are part of this ion trap and configured to trap one or a plurality of ions 180 in a space above the electrodes 125 (only one ion 180 is shown in Figure 1 for ease of illustration).

The structured electrode layer Mₑₗ and thus the electrodes 125 of the ion trap device 100 may be fabricated by micro-fabrication techniques. The semiconductor substrate 120 may be substantially planar. The Z-direction may represent the height dimension of the ion trap device 100. The X-direction and the Y-direction are perpendicular to each other and define a plane in the width and length direction of the ion trap device 100, which is normal to the Z-direction.

In the examples disclosed herein the structured electrode layer Mₑₗ may include RF electrodes 125 for RF trapping and DC electrodes 125 for static electric-field trapping. An ion trap disclosed herein can trap many ions 180 that may be individually addressable and movable by appropriately controlling the potentials of the electrodes 125 of the ion trap.

The location of the ion 180 can be controlled by electrical voltage(s) applied to the electrode(s) 125 of the structured electrode layer Mₑₗ.For instance, the ion 180 can be moved in the space in one or more lateral directions (e.g., in the Y-direction (see Figure 2) or, in general, in any direction lying in a plane which is normal to the Z-direction) by RF and DC (direct current) voltages separately coupled to specific electrodes 125.

The structured electrode layer Mₑₗ may further include feed lines connected to the electrodes 125. Such feed lines, like any other structure of the structured electrode layer Mₑₗ, may also be referred to by reference numeral 125.

The structured electrode layer Mₑₗ is an electrically conductive layer. It may include or be a metal layer, for example. That is, the structured electrode layer Mₑₗ (and thus, the electrode 125) may comprise or may be of an electrically conductive material such as Al, Cu, Au, or an AlSiCu alloy or an AlCu alloy, for example.

The semiconductor substrate 120 may, e.g., be a semiconductor wafer or a portion diced out of a semiconductor wafer (such as a chip). The semiconductor substrate 120 may, e.g., be a silicon (Si) substrate or a silicon carbide (SiC) substrate, for example.

The ion trap device 100 further includes an electrically insulating layer 130 disposed over a first main surface 120A of the semiconductor substrate 120 and beneath the structured electrode layer Mₑₗ.The semiconductor substrate 120 includes a second main surface 120B opposite the first main surface 120A.

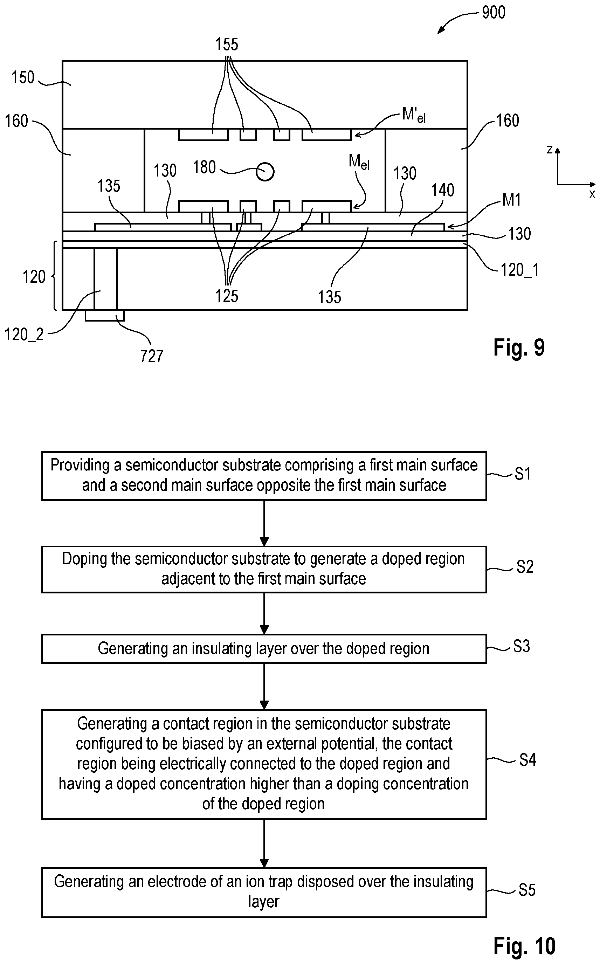

In Figure 1, the ion trap of the ion trap device 100 is exemplified to be designed as a so-called "surface-electrode" ion trap. In surface-electrode ion traps all electrodes (i.e., DC electrodes 125 and RF electrodes 125) are contained in a single plane. Such two-dimensional (2D) ion trap geometries provide for high scalability. As will be described further below, in other examples the ion trap device 100 may use three-dimensional (3D) ion trap geometry (Figure 9).

Figure 2 is a schematic top view of an exemplary, simplified electrode structure formed in the structured electrode layer Mₑₗ of an ion trap device 100. Some of the electrodes 125 may be formed as stripe electrodes, while other electrodes 125 may be formed as insular electrodes of small lateral dimensions, for example. Many different electrode layouts are known in the art and could be used in the example ion trap devices 100 disclosed herein.

The ion trap device 100 may also be referred to as a micro-fabricated ion trap or an ion trap chip. The ion trap device 100 may have one or a plurality of trapping sites, i.e. may be configured to trap one ion or, e.g., a chain of ions oriented in the Y-direction, for example.

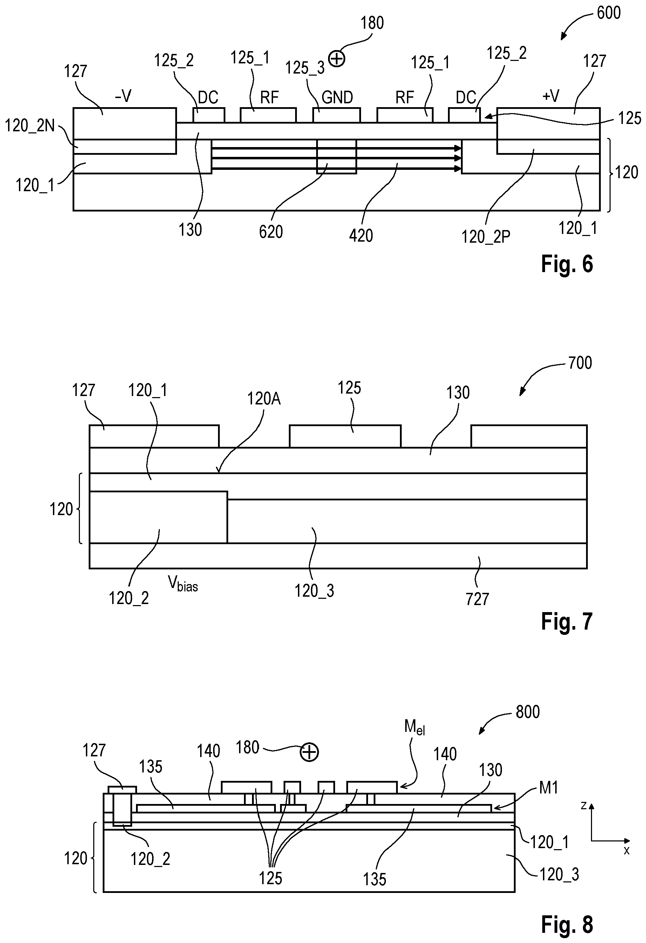

Figure 2 further illustrates optional terminal lands 125t of the structured electrode layer Mₑₗ available for electrically connecting the micro-fabricated electrodes 125 via connectors (not shown, e.g., wire bonds) to external circuitry (not shown). Other designs of electrical connections of the electrical interconnect are also feasible. The electrodes 125 may, in other examples, not be connected to terminal lands 125t exposed at the insulator 130 but, e.g., to vias which may directly connect to an electrical interconnect (e.g., Figure 8) and/or to integrated circuitry (not shown) in the semiconductor substrate 120, for example.

In the following, without loss of generality, the semiconductor substrate 120 is exemplified by a silicon substrate 120, e.g. by a silicon chip.

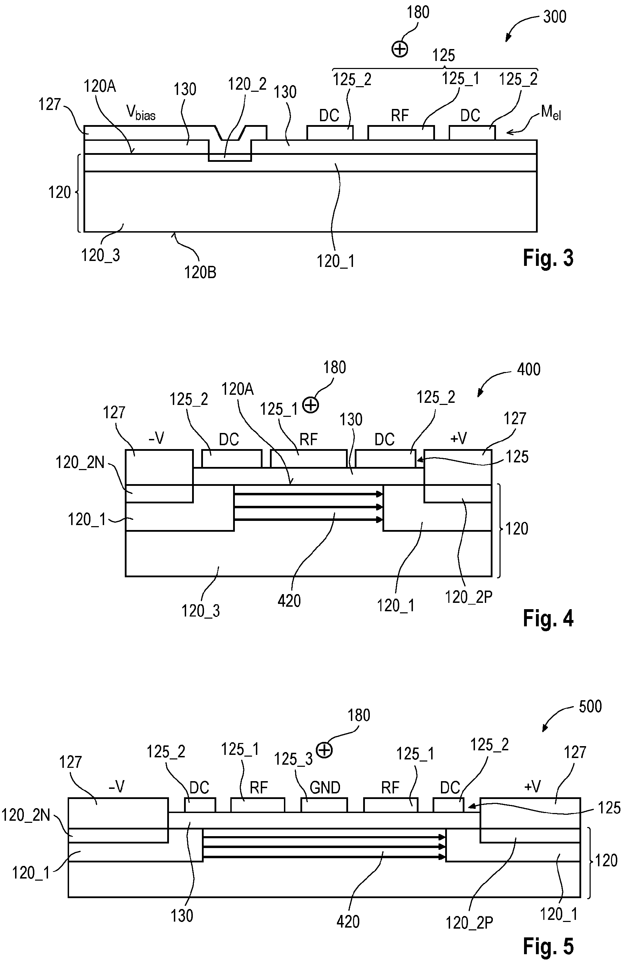

Referring to the exemplary ion trap device 300 of Figure 3, the semiconductor substrate 120 includes a doped region 120_1 adjacent the (upper) first main surface 120A of the semiconductor substrate 120. The doped region 120_1 may increase the electrical conductivity of the semiconductor substrate 120 in the vicinity of the interface between the semiconductor substrate 120 and the insulting layer 130.

Further, the semiconductor substrate 120 includes a contact region 120_2. The contact region 120_2 is electrically connected to the doped region 120_1 and has a doping concentration higher than a doping concentration of the doped region 120_1.

The contact region 120_2 is configured to be biased by an external potential V_{bias}. For example, the external bias potential V_{bias} is applied via bias voltage terminal 127. The bias voltage terminal 127 may be formed of a structured portion of the electrode layer Mₑₗ, for example.

The bias voltage terminal 127 is electrically coupled to the contact region 120_2 of the semiconductor substrate 120 and allows to apply a defined potential (corresponding to V_{bias}) to the doped region 120_1. This allows to eliminate the effect of stray charges on trapped ions 180, thereby reducing micro-motion of the ion 180 and ion heat-up. In other words, uncontrolled stray fields and electric noise caused by electrical charges generated by, e.g., photoionization in or on the semiconductor substrate may be reduced or eliminated.

The doping concentration of the doped region 120_1 is higher than the doping concentration of the bulk region 120_3 of the semiconductor substrate 120. The doping concentration of the doped region 120_1 may, e.g., be equal to or greater than 2.0×10¹⁷ or 1.0×10¹⁸ or 1.0×10¹⁹ cm⁻³. The doping concentration of the doped region 120_1 may be high enough to significantly increase the electrical conductivity of the doped region 120_1 at cryogenic temperatures (e.g. at temperatures equal to or below 50K, 40K, 30K, 20K) as compared to a case when the doped region 120_1 would not be present. The doping concentration of the doped region 120_1 may be sufficiently high to form degenerately doped silicon (at room temperature or even at cryogenic temperatures as mentioned above) in the doped region 120_1. A high electrical conductivity of the doped region 120_1 may ensure that interfering stray charges cannot survive in or on the semiconductor substrate 120, as they are removed by the biased doped region 120_1.

The doped region 120_1 is also referred to as a well in the art. Given the semiconductor substrate is a P-type substrate 120 (having, e.g., a low P-type doping concentration of about 1.0×10¹⁵ cm⁻³ or 1.0×10¹⁶ cm⁻³), the doping region 120_1 (having, as mentioned before, a substantially higher doping concentration than the bulk region 120_3) may be referred to as a P-well of the substrate 120. Analogously, using an N-type semiconductor substrate, the doping region 120_1 may be referred to as an N-well.

As the substrate 120 of the ion trap device 100 is a semiconductor substrate, electronic devices such as, e.g., digital-to-analog converters (DACs) or switches may be integrated directly in the semiconductor substrate 120 and hence in the ion trap device 100. In this case, the doped region 120_1 may further act to effectively shield the ion trap region above the substrate 120 from the electronic devices integrated in the substrate 120.

The doped region 120_1 may extend across a large area of the semiconductor substrate 120. The greater the lateral area over which the doped region 120_1 extends, the more effectively stray charges may be eliminated in the ion trap device 100. In other examples, the doped region 120_1 may also cover only specific lateral areas of the semiconductor substrate 120. For example, the doped region 120_1 may at least extend over the entire area of the semiconductor substrate 120 where electrodes 125 are located. For example, the doped region 120_1 may overlap a plurality of electrodes 125 of the ion trap device 100 in a vertical projection. Since stray charges preferentially accumulate under RF electrodes, the doped region 120_1 may, e.g., at least partly or fully overlap with some or all RF electrodes 125 in the vertical projection.

In some examples, the doped region 120_1 may extend continuously across most or all of the lateral size of the ion trap device 100. For example, the bias voltage terminal 127 may be placed adjacent a corner of the semiconductor substrate 120 (Figure 2). Optionally a plurality of bias voltage terminals 127 may be provided. For example, bias voltage terminals 127 may be placed adjacent each corner of the semiconductor substrate 120.

The insulating layer 130 may, e.g., be an inorganic dielectric layer such as, e.g., a hard passivation layer including or being of silicon oxide, silicon nitride or silicon oxynitride. The insulating layer 130 may, e.g., be a thermal silicon oxide layer. In other examples, the insulating layer 130 may include or be of deposited silicon oxide.

The insulating layer 130 may also extend across a large area of the semiconductor substrate 120. In particular, the insulating layer 130 may extend substantially over the entire first main surface 120A of the semiconductor substrate 120.

The insulating layer 130 may be located directly adjacent the first main surface 120A of the substrate 120. That way, any stray charges located at the lower surface of the insulating layer 130 are effectively removed by the electrically conductive doped region 120_1 when connected to V_{bias} via the contact region 120_2.

The contact region 120_2 may be heavily doped to provide for an electrically conductive metal-to-semiconductor contact. More specifically, an ohmic contact or a Schottky contact may be implemented.

To create a low resistance contact, the bandgap of the contact region 120_2 should be narrow enough to allow tunneling of the charge carriers. The width of the bandgap is inversely proportional to the root of the doping concentration. Consequently, the doping concentration of the contact region 120_2 may be chosen high enough to create an ohmic contact.

In a degenerately doped semiconductor, the Fermi level is shifted very close to or into the conduction band (or valence band). This enables an electrical conductivity of the semiconductor material (e.g. silicon) similar to a metal (even at cryogenic temperatures). For example, the doping concentration of the contact region 120_2 may be equal to or greater than 2.0×10¹⁸ or 1.0×10¹⁹ or 1.0×10²⁰ cm⁻³.

The contact region 120_2 may be adjacent the first main surface 120A of the semiconductor substrate 120 (Figure 3) to provide for a front side contact of the doped region 120_1. In other examples, as will be described in more detail further below, the contact region 120_2 may be adjacent the second main surface 120B of the substrate 120 to provide for a backside contact of the semiconductor substrate 120 (Figure 7).

Referring to Figure 4, an ion trap device 400 includes a semiconductor substrate 120 as described above. In the ion trap device 400 the semiconductor substrate 120 includes a drift region 420 adjacent the first main surface 120A of the semiconductor substrate 120. The drift region 420 is separated from the electrodes 125 by the insulating layer 130, as described above.

The drift region 420 may be located beneath an RF electrode 125_1. More specifically, the lateral extension of the drift region 420 (indicated by arrows) may be chosen to completely overlap the RF electrode 125_1 in a vertical projection. In other words, the drift region 420 may exclude any (electrically conductive) doped region 120_1 from an area vertically beneath the RF electrode 125_1.

As shown in Figure 4, the drift region 420 may be formed by an area of the bulk region 120_3 of the semiconductor substrate 120 having a low doping concentration. In the lateral direction, the drift region 420 may be bounded by regions having a higher doping concentration than the drift region 420. These regions (between which the drift region 420 extends) may be represented by doped regions 120_1, as described above.

The semiconductor substrate 120 may further include a first contact region 120_2N and a second contact region 120_2P. The first contact region 120_N is configured to be biased by a first external potential and the second contact region 120_2P is configured to be biased by a second external potential, wherein there is a potential difference between the first and second external potentials. For example, the first contact region 120_N may be configured to be biased by a negative potential -V and the second contact region 120_2P may be configured to be biased by a positive potential +V, such that both electrons and holes can drift. The drift region 420 is disposed between and electrically connected to the first contact region 120_2N and the second contact region 120_2P. As shown in Figure 4, the drift region 420 may be electrically connected to the first contact region 120_2N and the second contact region 120_2P via the doped regions 120_1 (P-wells), for example.

In ion trap device 400 stray charges beneath the RF electrode 125_1 (and, optionally, beneath all electrodes 125, 125_1, 125_2) are removed by the electrical field generated in the drift region 420 rather than by a region of enhanced electrical conductivity (namely, the doped region 120_1) as exemplified in Figure 3. By applying a positive potential (+V) and a negative potential (-V) through the two contact regions 120_2P, 120_2N to the substrate 120, an electrical field is generated between, e.g., the doped regions 120_1 (P-wells) by which charge carriers generated by, e.g., stray light can flow away.

The provision of a drift region 420 beneath RF electrodes 125_1 significantly reduces the capacitance of the ion trap device 400 between RF-voltage and ground (GND). More specifically, the drift region 420 may be used to replace the otherwise necessary ground shielding layer under the RF electrode 125_1. Such drift region 420 may be specifically effective for silicon as a semiconductor material, since silicon has a very low loss tangent.

The drift region 420 may optionally also extend beneath a part or the entire extension of some or all DC electrodes 125_2 in a vertical projection. However, as the voltage applied to DC electrodes 125_2 is not alternating and is substantially smaller than the (alternating) voltage applied to RF electrodes 125_1, the effect in terms of the reduction of the overall device capacitance is not so prominent for DC electrodes 125_2 as compared to RF electrodes 125_1.

The concepts described in conjunction with Figure 3 (highly conductive doped region 120_1) and Figure 4 (drift region 420) may be combined in a single ion trap device. That is, while the drift region concept (Figure 4) is, e.g., used mainly or exclusively below RF electrodes 125_1, the doped region 120_1 concept may be used in residual areas of the semiconductor substrate 120.

For example, referring to Figure 2, the doped region 120_1 may extend across a majority of the area of the semiconductor substrate 120. However, in the vicinity of RF-electrodes 125_2, the doped region 120_1 may be structured to provide for "local" drift region(s) 420 and separate (insular) doped regions 120_1 (P-wells) to define the drift region(s) 420 beneath the RF-electrode(s) 125_2. The separate (insular) doped regions 120_1 (P-wells) may be connected to at least two different potentials -V and +V, as described above.

As will be described further below in connection with Figure 9, in three-dimensional (3D) ion trap devices one substrate may carry only DC electrodes, while the other substrate may carry only RF electrodes. In other words, DC electrodes and RF electrodes may be separately applied to different substrates. That is, returning to Figure 3, the substrate 120, if used in a 3D ion trap device, may carry DC electrodes 125_2 and no RF electrodes 125_1, RF electrodes 125_1 and no DC electrodes 125_2 or, as shown, both DC electrodes 125_2 and RF electrodes 125_1. Analogously, the substrate 120 shown in Figure 4, if used in a 3D ion trap device, may carry DC electrodes 125_2 and no RF electrodes 125_1, RF electrodes 125_1 and no DC electrodes 125_2 or, as shown, both DC electrodes 125_2 and RF electrodes 125_1.

Referring to Figure 5, the ion trap device 500 includes, for example, a (central) ground electrode 125_3 (GND) disposed between two RF electrodes 125_1. The ground electrode 125_3 may be held on 0V potential. The DC electrodes 125_2 may be disposed at both outer sides of the RF electrodes 125_1.

In this example, the drift region 420 may extend beneath the RF electrodes 125_1 and beneath the ground electrode 125_3. Further, as mentioned above, the drift region 420 may or may not or may partly extend beneath the DC electrode(s) 125_2 (if present, see the comments above) in a vertical projection. In view of any other features of the ion trap device 500 of Figure 5, reference is made to the description in connection with Figure 4 to avoid reiteration.

Figure 6 illustrates an exemplary ion trap device 600. The ion trap device 600 may be identical with the ion trap device 500 of Figure 5 except that the drift region 420 includes a doped zone 620 located beneath the ground electrode 125_3. The doped zone 620 may, e.g., have the same (relatively high) doping concentration as the doped region 120_1. The doped zone 620 does not add to the overall capacitance of the ion trap device 600, since it is located beneath the ground electrode 125_3. However, the removal of stray charges (charge carriers) in a central region of the ion trap device 600 may be improved. As shown in Figure 6, the ground electrode 125_3 may, e.g., be provided vertically beneath a trap site of an ion 180, so that the doped zone 620 may be located in a substrate region near (or closest) to the trapping site of the ion 180.

As shown in Figure 6, the doped zone 620 may be, e.g., electrically floating. In other examples, the doped zone 620 may be electrically connected to the ground electrode 125_3 or another external potential. This may be accomplished by a further contact region (not shown) located adjacent the doped zone 620 and, e.g., beneath the ground electrode 125_3 (GND). The further contact region (not shown) may, e.g., have the same (high) doping concentration as the contact region 120_2 (or 120_2N, 120_2P).

For example, if the doped zone 620 is to be connected to the ground electrode 125_3 (GND), the metal of the ground electrode 125_3 (GND) may pass through the insulating layer 130 and contact to this further contact region (not shown), which contacts the doped zone 620 and holds the doped zone 620 on ground potential. If the doped zone 620 is to be connected to another external potential different from the ground potential (GND), the further contact region (not shown) may be connected to a metal wiring (not shown) to which this external potential can be applied.

If another external potential is to be applied to the doped zone 620 via a further contact region as described above, the further external potential may have the opposite sign as a potential (or potentials) to which the outer doped regions 120_1 are connected. For example, the doped zone 620 may be applied to a positive potential +V and the outer doped regions 120_1 may be applied to a negative potential -V. Then, the charge carrier drift would be towards the central doped zone 620 for both undoped areas of the drift region 420. That is, arrows (indicating electron drift) would then point from both sides in the central direction towards the doped zone 620.

Figure 7 illustrates a further possibility of electrically contacting the doped region 120_1 (e.g., P-well) to an external potential V_{bias} or a negative voltage -V or a positive voltage +V, respectively (the voltages V_{bias}, -V and +V are DC voltages which are substantially smaller than the RF voltages applied to RF electrodes 125_1). In the example shown in Figure 7, the contact region 120_2 is located adjacent and beneath the doped region 120_1. That way, a backside contact to the semiconductor substrate 120 may be implemented.

To that end, a backside metal layer 727 may be disposed on the (lower) second main surface 120B of the substrate 120. The backside metal layer 727 may electrically connect to the contact region 120_2 of the semiconductor substrate 120. As described above, an ohmic contact or a Schottky contact may be realized to connect the backside metal layer 727 to the doped region 120_1 (P-well) of the semiconductor substrate. That way, any potential (e.g., V_{bias}, +V, -V) applied to the backside metal layer 727 may be applied to the contact region 120_2.

The concept of providing electrical contacts on the backside (Figure 7) may be combined with the concept of applying front side metal contacts, as shown in Figures 3 to 6. In particular, if doped region 120_1 may be structured to form one or a plurality of drift regions 420, backside contacts can provide a high degree of design variability (since contacts and electrodes are located on opposite sides of the semiconductor substrate 120).

Figures 8 and 9 illustrate ion trap devices 800 and 900, which make use of concepts or features described above. Figure 8 shows a two-dimensional (2D) ion trap device 800 which is similar to the ion trap device 100 (Figure 1) except that the electrodes 125 are electrically coupled to an electrical interconnect, which is structured in a lower metal layer 135 (also referred to as M1). A dielectric layer 140 may be arranged between the electrode layer Mₑₗ and the lower metal layer 135 (M1).

The lower metal layer 135 (M1) may, e.g., be a structured metal layer. The structured lower metal layer 135 (M1) may form a metal interconnect (wiring) configured to electrically connect the electrodes 125 of the structured electrode layer Mₑₗ to external circuitry. As shown in Figure 8, the structured lower metal layer 135 (M1) may be electrically connected to the (separate) electrodes 125 of the structured electrode layer Mₑₗ by vias extending through the dielectric layer 140.

In other words, the structured lower metal layer 135 (M1) may, e.g., be structured as an electrical redistribution layer. This allows the formation of complex electrode structures and insular electrodes 125 in the structured electrode layer Mₑₗ. Further, such a multilayer architecture of the ion trap device 800 promotes scalability of the device 800.

Figure 9 illustrates an ion trap device 900 which implements a 3D ion trap. 3D ion trap geometries such as, e.g., linear Paul traps may allow substantially higher potential depths and higher trap frequencies as compared to 2D trap geometries. In the exemplary ion trap device 900 the ion 180 is trapped between the semiconductor substrate 120 and a further substrate 150 disposed over and spaced apart from the semiconductor substrate 120. One or a plurality of spacer members 160 may be disposed between the semiconductor substrate 120 and the further substrate 150.

The spacer members 160 define the spacing between the semiconductor substrate 120 and the further substrate 150. The spacer members 160 may be bonded to the semiconductor substrate 120 and/or to the further substrate 150 by wafer-bonding techniques. For example, glass-bonding techniques or eutetic bonding techniques or anodic bonding techniques or thermos-compression bonding techniques may be used.

A structured top electrode layer Mₑₗ' may be disposed at a main side of the further substrate 150 opposite the structured electrode layer Mₑₗ.The structured top electrode layer Mₑₗ' forms electrodes 155 of the 3D ion trap device 900. The 3D ion trap device 900 is configured to trap ion(s) 180 in the space between the structured electrode layer Mₑₗ and the structured top electrode layer Mₑₗ'.

Similar as the electrode layer Mₑₗ, the top electrode layer Mₑₗ' may also be formed and structured by micro-fabrication techniques. Further, the further substrate 150, the electrodes 155 and intermediate layers (not shown) may optionally be designed as described in connection with the semiconductor substrate 120, the electrodes 125 and intermediate layers (in particular, the insulating layer 130). Reference is made to the above description for sake of brevity.

In particular, as already mentioned, a 3D design allows to separate RF electrodes and DC electrodes to the different substrates 120, 150. In this and also in other cases the semiconductor substrate 120 and the further (semiconductor) substrate 150 may make use of the different concepts described above in connection with Figure 3 (doped region 120_1) and Figures 4 to 6 (drift region 420). Further, any type of contact implementation, e.g. front side contacts (e.g., bias voltage terminals 127) or backside contacts at the backside metal layer 727 may be feasible.

Figure 10 is flowchart illustrating exemplary stages of a method of manufacturing a device for controlling trapped ions.

At S1 a semiconductor substrate is provided which includes a first main surface and a second main surface opposite the first main surface.

At S2 the semiconductor substrate is doped to generate a doped region adjacent the first main surface. The doped region may be a continuous region extending across the entire area or a predominant area of the semiconductor substrate or may be patterned into a plurality of doped regions. For example, boron (B) may be used for substrate doping to generate the doped region 120_1 (P-well). In some examples an implant dose of about 1×10¹⁶ cm⁻² and an implant energy of about 70 keV may be used. That way, degenerately doped silicon may be formed in the doped region 120_1.

At S3 an insulating layer is generated over the doped region of the semiconductor substrate. The insulating layer may, e.g., be generated by thermal oxidation of a silicon semiconductor substrate, for example. Due to the high temperature this process may be used simultaneously as annealing for the doping process at S2. In other examples, the insulating layer may be generated by a deposition process rather than a growing process. In this case a separate annealing process may follow for annealing of the doped region generated at S2.

At S4 a contact region in the semiconductor substrate may be generated. The contact region is configured to be biased by an external potential. The contact region is generated to be electrically connected to the doped region and has a doping concentration higher than a doping concentration of the doped region.

For example, S4 is carried out by first patterning the insulating layer by, e.g., optical lithography and etching. Then, the patterned insulating layer may be used as a hard mask for high dose implantation of the contact region at S4.

S4 may be followed by a process of annealing the contact region.

At S5 an electrode of an ion trap is generated and disposed over the insulating layer. Electrode generation may be carried out by deposition of a continuous electrode layer and patterning or by generating a patterned electrode layer in accordance with the desired electrode layout.

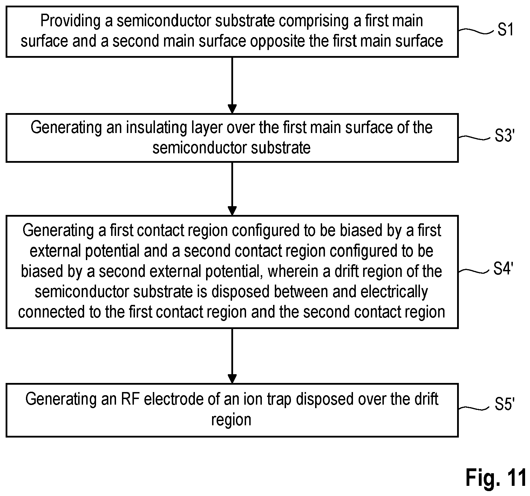

Referring to Figure 11, a method of manufacturing an ion trap device may include, at S1, providing a semiconductor substrate comprising a first main surface and a second main surface opposite the first main surface.

Optionally, the semiconductor substrate is doped to generate a doped region adjacent the first main surface (compare S2). As drift regions remain undoped, the doping process includes lithography to provide for a pattern of doped regions.

At S3' an insulating layer is generated over the first main surface of the semiconductor substrate. Reference is made to the description of S3.

At S4' a first contact region, configured to be biased by a first external potential, and a second contact region, configured to be biased by a second external potential, are generated. The drift region of the semiconductor substrate is disposed between and electrically connected to the first contact region and the second contact region.

As described above, the electrical connection between the contact regions and the drift region may be provided by (patterned) doped regions.

At S5' an RF electrode is generated over the drift region. That way, a low capacitance between the RF electrode and ground (GND) can be obtained.

To verify the doping and electrically contacting of the semiconductor substrate 120, four-point conductance measurements were performed. The measurements were performed in a cryogenic environment at 12K using a silicon substrate having a doping concentration below 1.0×10¹⁶ cm⁻³. Substrate doping to generate the doped regions 120_1 (P-well doping) was carried out by boron (B) implantation at a dose of 1×10¹⁶ cm⁻² and an implant energy of 70 keV. Contact region doping was carried out by using BF₂ at a dose of 1×10¹⁶ cm⁻² and an implant energy of 20 keV. The contact manufactured that way was an ohmic contact with a resistance of less than 60 Ω. An electrical resistance of less than 2 kΩ and, after optimizing the doping concentration, of less than 1.1 kΩ could be reached for a current flowing through the doped region from one edge of the silicon substrate to the other edge (see Figure 2, bias voltage terminals 127).

### EXAMPLES

The following examples pertain to further aspects of the disclosure:
Example 1 is a device for controlling trapped ions. The device includes a semiconductor substrate. The semiconductor substrate includes a first main surface and a second main surface opposite the first main surface. The substrate includes a doped region adjacent the first main surface. An electrode of an ion trap is disposed over the doped region. An insulating layer is disposed between the electrode and the doped region. The substrate comprises a contact region configured to be biased by an external potential, the contact region being electrically connected to the doped region and having a doping concentration higher than a doping concentration of the doped region.
In Example 2, the subject matter of Example 1 can optionally include wherein the ion trap comprises a plurality of electrodes and the doped region overlaps the plurality of electrodes in a vertical projection.
In Example 3, the subject matter of Example 1 or 2 can optionally include wherein the insulating layer is directly adjacent to the first main surface of the semiconductor substrate.
In Example 4, the subject matter of any of the preceding Examples can optionally include wherein the doping concentration of the doped region is equal to or greater than 2.0×10¹⁷ or 1.0×10¹⁸ or 1.0×10¹⁹ cm⁻³.
In Example 5, the subject matter of any of the preceding Examples can optionally include wherein the doping concentration of the contact region is equal to or greater than 2.0×10¹⁸ or 1.0×10¹⁹ or 1.0×10²⁰ cm⁻³.
In Example 6, the subject matter of any preceding Example can optionally include wherein the contact region is adjacent the first main surface.
In Example 7, the subject matter of one of Examples 1 to 5 can optionally include wherein the contact region is adjacent the second main surface.
Example 8 is a device for controlling trapped ions. The device includes a semiconductor substrate. The semiconductor substrate includes a first main surface and a second main surface opposite the first main surface. The semiconductor substrate includes a drift region adjacent the first main surface. An RF electrode of an ion trap is disposed over the drift region. An insulating layer is disposed between the RF electrode and the drift region. The semiconductor substrate includes a first contact region configured to be biased by a first external potential and a second contact region configured to be biased by a second external potential, the drift region being disposed between and electrically connected to the first contact region and the second contact region.
In Example 9, the subject matter of Examples 8 can optionally include wherein the ion trap comprises a plurality of DC electrodes and a plurality of RF electrodes, and wherein the drift region overlaps the plurality of RF electrodes in a vertical projection.
In Example 10, the subject matter of Example 9 can optionally include wherein the ion trap further comprises a ground electrode, wherein the drift region comprises a doped zone located below the ground electrode.
In Example 11, the subject matter of any of Examples 8 to 10 can optionally include wherein the insulating layer is directly adjacent to the first main surface of the semiconductor substrate.
In Example 12, the subject matter of any of Examples 8 to 11 can optionally include wherein the drift region comprises a doping concentration in a range between 1.0×10¹⁵ and 1.0×10¹⁷ cm⁻³, in particular 4.0×10¹⁵ and 5.0×10¹⁶ cm⁻³.
In Example 13, the subject matter of any of Examples 8 to 12 can optionally include wherein the first contact region and the second contact region are adjacent the first main surface, or wherein the first contact region and the second contact region are adjacent the second main surface.
Example 14 a method of manufacturing a device for controlling trapped ions. The method includes providing a semiconductor substrate including a first main surface and a second main surface opposite the first main surface. The semiconductor substrate is doped to generate a doped region adjacent the first main surface. An insulating layer is generated over the doped region. A contact region configured to be biased by an external potential is generated in the semiconductor substrate. The contact region is electrically connected to the doped region and has a doping concentration higher than a doping concentration of the doped region. An electrode of an ion trap disposed over the doped region is generated.
Example 15 is a method of manufacturing a device for controlling trapped ions. The method includes providing a semiconductor substrate including a first main surface and a second main surface opposite the first main surface. An insulating layer is generated over the first main surface of the semiconductor substrate. A first contact region configured to be biased by a first external potential and a second contact region configured to be biased by a second external potential are generated, wherein a drift region of the semiconductor substrate is disposed between and electrically connected to the first contact region and the second contact region. An RF electrode of an ion trap disposed over the drift region is generated.

Although specific examples have been illustrated and described herein, it will be appreciated by those of ordinary skill in the art that a variety of alternate and/or equivalent implementations may be substituted for the specific examples shown and described without departing from the scope of the present invention. This application is intended to cover any adaptations or variations of the specific examples discussed herein. Therefore, it is intended that this invention be limited only by the claims and the equivalents thereof.

## Claims

1. A device for controlling trapped ions, the device comprising:
a semiconductor substrate comprising a first main surface and a second main surface opposite the first main surface, the semiconductor substrate comprising a doped region adjacent the first main surface;
an electrode of an ion trap disposed over the doped region; and
an insulating layer disposed between the electrode and the doped region; wherein
the semiconductor substrate comprises a contact region configured to be biased by an external potential, the contact region being electrically connected to the doped region and having a doping concentration higher than a doping concentration of the doped region.

2. The device of claim 1, wherein the ion trap comprises a plurality of electrodes and the doped region overlaps the plurality of electrodes in a vertical projection.

3. The device of claim 1 or 2, wherein the insulating layer is directly adjacent to the first main surface of the semiconductor substrate.

4. The device of any of the preceding claims, wherein the doping concentration of the doped region is equal to or greater than 2.0×10¹⁷ or 1.0×10¹⁸ or 1.0×10¹⁹ cm⁻³.

5. The device of any of the preceding claims, wherein the doping concentration of the contact region is equal to or greater than 2.0×10¹⁸ or 1.0×10¹⁹ or 1.0×10²⁰ cm⁻³.

6. The device of any of the preceding claims, wherein the contact region is adjacent the first main surface.

7. The device of any of claims 1 to 5, wherein the contact region is adjacent the second main surface.

8. A device for controlling trapped ions, the device comprising:
a semiconductor substrate comprising a first main surface and a second main surface opposite the first main surface, the semiconductor substrate comprising a drift region adjacent the first main surface;
an RF electrode of an ion trap disposed over the drift region; and
an insulating layer disposed between the RF electrode and the drift region; wherein
the semiconductor substrate comprises a first contact region configured to be biased by a first external potential and a second contact region configured to be biased by a second external potential, the drift region being disposed between and electrically connected to the first contact region and the second contact region.

9. The device of claim 8, wherein the ion trap comprises a plurality of DC electrodes and a plurality of RF electrodes, and wherein the drift region overlaps the plurality of RF electrodes in a vertical projection.

10. The device of claim 9, wherein the ion trap further comprises a ground electrode, wherein the drift region comprises a doped zone located below the ground electrode.

11. The device of any of claims 8 to 10, wherein the insulating layer is directly adjacent to the first main surface of the semiconductor substrate.

12. The device of any of claims 8 to 11, wherein the drift region comprises a doping concentration in a range between 1.0×10¹⁵ and 1.0×10¹⁷ cm⁻³, in particular 4.0×10¹⁵ and 5.0×10¹⁶ cm⁻³.

13. The device of any of claims 8 to 12, wherein the first contact region and the second contact region are adjacent the first main surface, or wherein the first contact region and the second contact region are adjacent the second main surface.

14. A method of manufacturing a device for controlling trapped ions, the method comprising:
providing a semiconductor substrate comprising a first main surface and a second main surface opposite the first main surface;
doping the semiconductor substrate to generate a doped region adjacent the first main surface;
generating an insulating layer over the doped region;
generating a contact region in the semiconductor substrate configured to be biased by an external potential, the contact region being electrically connected to the doped region and having a doping concentration higher than a doping concentration of the doped region; and
generating an electrode of an ion trap disposed over the insulating layer.

15. A method of manufacturing a device for controlling trapped ions, the method comprising:
providing a semiconductor substrate comprising a first main surface and a second main surface opposite the first main surface;
generating an insulating layer over the first main surface of the semiconductor substrate;
generating a first contact region configured to be biased by a first external potential and a second contact region configured to be biased by a second external potential, wherein a drift region of the semiconductor substrate is disposed between and electrically connected to the first contact region and the second contact region; and
generating an RF electrode of an ion trap disposed over the drift region.
